# EUROPEAN PATENT SPECIFICATION

(11) **EP 1 382 522 B1**
(45) Date of publication and mention of the grant of the patent: **08.06.2005**
(21) Application number: 03016449.5
(22) Date of filing: 21.07.2003
(51) Int. Cl.: B62K 25/28

(54) **Saddle-type vehicle**
Fahrzeug mit Sattel
Véhicule du type à selle

(30) Priority: 19.07.2002 JP 2002211833; 19.02.2003 JP 2003041540
(43) Date of publication of application: 21.01.2004
(73) Proprietor: YAMAHA HATSUDOKI KABUSHIKI KAISHA, Iwata-shi Shizuoka-ken (JP)
(72) Inventor: Takano, Kazuhisa, Iwata-shi Shizuoka-ken (JP)
(74) Representative: Grünecker, Kinkeldey, Stockmair & Schwanhäusser Anwaltssozietät

(56) References cited:
- EP-A- 0 082 496
- EP-A- 0 769 447
- EP-A- 1 223 101
- JP-A- 62 039 389
- US-A- 4 650 026
- US-A- 4 706 774
- US-A- 4 753 314
- US-A- 5 975 230
- US-A- 6 131 934

## Description

The present invention relates to a saddle-type vehide according to the preamble portion of claim 1. In particular, it relates to a body frame damping structure in a saddle-type vehicle (i.e. a saddle-ridden vehicle) disposed with damping force generating means that are disposed so as to bridge portions of the body frame with other portions of the body frame, so that an impact force applied to the body frame at the time of traveling is alleviated by the damping force generating means. More particularly, it relates to a body frame damping structure in a saddle-type vehicle disposed with damping force generating means that are disposed so as to bridge portions of the body frame with other portions of the body frame, with the damping force generating means being respectively coupled the portions and the other portions, so that an impact force, which is applied to the body frame at the time of traveling from a traveling road surface and mutually relatively elastically deforms the portions and the other portions, is damped by the damping force generating means.

Conventionally, there has been known a saddle-type vehicle configured as follows.

That is, the vehicle is disposed with a body frame configuring a frame of the vehicle body, a front fork steerably supported at a front end portion of the body frame, a front wheel supported at lower end portions of the front fork, a rear arm pivotally supported by a pivot support shaft at a rear portion of the body frame so as to be swingable up and down, and a rear wheel supported at a swinging end of the rear arm. The body frame is disposed with a head pipe, which configures the front end portion of the body frame and supports the front fork, and a frame body, which extends rearward and downward from the head pipe and supports the rear arm at extension portions of the frame body. The body frame is supported on a traveling road surface by the front and rear wheels.

At the time the vehicle is traveling, an impact force is applied to the body frame from the traveling road surface via the front and rear wheels. Here, because it is difficult for the impact force applied to the body frame from the traveling road surface to be alleviated when the rigidity of the body frame is too high, the vehicle tends to travel while bouncing with respect to the traveling road surface. However, this is not preferable in terms of steering stability.

Thus, the body frame has conventionally been made elastically deformable to a certain extent due to the fact that the impact force is applied thereto, whereby the impact force is alleviated so that steering stability is satisfactorily maintained.

However, in the above-described conventional technology, the body frame is made to simply elastically deform in accordance with the size of the impact force applied thereto. For this reason, when a large impact force is applied with respect to the body frame during travel in a race or the like, large elastic deformation arises in the body frame and this deformation tends to persist, which also hinders steering stability and is not preferable.

In order to ensure high rigidity of the rear arm of the vehicle body and reduce vibrational sound in the vehicle of the above-described configuration, a member has conventionally been proposed in which the cross section of the rear arm is made into a box-like shape and an interior space thereof is filled with polyurethane foam (JP-A-2001-138978).

However, in the above publication, it is a constituent requirement to fill with the polyurethane foam and make the cross section of the rear arm into the box-like shape. Also, in a case where the rear arm is elastically deformed by an impact force, it is conceivable for the foam to work with respect to contracting elastic deformation so that the elastic deformation is suppressed. However, because the foam does not include tensile strength, it is conceivable that the foam does not work with respect to extending elastic deformation, so that this elastic deformation cannot be suppressed. Thus, even if the above-described conventional technology is applied to a body frame, there is a large limit on the application in terms of constitution in that the cross section is made into the box-like shape. It is conceivable that a satisfactory structure cannot be obtained in terms of satisfactorily maintaining steering stability by suppressing elastic deformation of the body frame resulting from the impact force.

Thus, conventionally from the saddle-type vehicle described in JP-A-2001-138978, there is known a vehicle disposed with a body frame configuring a frame of the vehicle body, a front fork steerably supported at a front end portion of the body frame, a front wheel supported at lower end portions of the front fork, a rear arm pivotally supported by a pivot support shaft at a rear portion of the body frame so as to be swingable up and down, a rear wheel supported at a swinging end of the rear arm, and dampers included inside the front fork and disposed so as to bridge the body frame and the rear arm.

The body frame is disposed with a head pipe that configures the front end portion of the body frame and supports the front fork, a frame body that extends rearward and downward from the head pipe and supports the rear arm at extension portions of the frame body, a seat bracket that extends rearward from the frame body and supports a seat, and an internal combustion engine that is supported at the frame body and is interlocked and coupled with the rear wheel. The body frame is supported on a traveling road surface by the front and rear wheels.

At the time the vehicle is traveling due to driving of the internal combustion engine, an impact force is applied to the body frame from the traveling road surface via the front and rear wheels, regardless of the presence of the dampers. Here, because it is difficult for the impact force applied to the body frame from the traveling road surface to be damped by the body frame itself when the rigidity of the body frame is too high, the vehicle tends to travel while bouncing from the traveling road surface each time the impact force is applied to the body frame. However, this action of the vehicle is not preferable in terms of steering stability.

Thus, the body frame is usually made elastically deformable to a certain extent, whereby the impact force is damped so that steering stability is satisfactorily maintained when the impact force is applied to the body frame.

Incidentally, because the vehicle is of a saddle-type, the constituent parts of the vehicle are disposed compactly to make the vehicle smaller in terms of the function of the vehicle, and there is a demand to make the vehicle lighter. For this reason, it is not easy to ensure sufficient strength and rigidity for the portions of the body frame. For instance, when the vehicle is used for a race and a large impact force (kickback) is instantaneously applied to the body frame during high-speed travel, there is the potential for elastic deformation of the body frame to become large, and this large deformed state tends to persist, which also hinders steering stability and is not preferable.

Also, in JP-A-2001-138978, the cross section of the rear arm is made into a box-like shape and an interior space thereof is filled with polyurethane foam, whereby high rigidity is secured for the rear arm of the vehicle body and vibrational sound is reduced.

Incidentally, because the foam has compression strength, in a case where the rear arm is elastically deformed by an impact force, it is conceivable for the foam to work, with respect to elastic deformation in which the cross-sectional area of the rear arm is compressed, to counter this compression so that the elastic deformation is suppressed and satisfactory steering stability is maintained. However, because the foam does not include tensile strength, it is difficult for the foam to work against elastic deformation in which the cross-sectional area of the rear arm expands, so that this elastic deformation cannot be sufficiently suppressed. Thus, the above-described configuration is insufficient in terms of maintaining satisfactory steering stability by suppressing elastic deformation of the body frame resulting from the impact force.

Moreover, in terms of the properties of the foam, it is also conceivable for the working of the foam in terms of strength to be insufficient simply by applying the foam to outer surface sides of the body frame. Thus, according to JP-A-2001-138978, the cross section of the body frame is made into the box-like shape and the interior space of the rear arm is filled with the foam. However, when the foam is disposed in this manner, a constraint is placed on the cross-sectional shape of the body frame and molding of the body frame tends to become cumbersome.

From JP 62-39389 there is known a motorcycle according to the preamble of claim 1 disposed with a body frame, wherein a pivotally arranged rear arm (extending in a front-rear direction) is disposed rearward of a lower portion of the body frame. A saddle is fixed to the body frame. An engine of the motorcycle is swingably mounted to the body frame via two separate mounting mechanisms. Each of the mounting mechanisms includes a rod member and a damper, wherein the rod member is pivotally mounted on its one end to the engine and on its second end to the body frame, and wherein the damper is pivotally mounted on its one end to the rod member and on its second end to the body frame. Therein, each of the dampers is mounted on one of its ends to the body frame, whereas the respective other end is mounted to the rod member. Therein the rod member itself is rotatably mounted to the body frame.

Further, US 5,975,230 discloses a motorcycle having a body frame formed of tubular members, wherein two dampers are provided in the lower rearward position of the body frame. These dampers are arranged between the lower rearward portion of the body frame and the forward lower portion of the rear arm of the motorcycle supporting the rear wheel.

And US 4,753,314 discloses a rear wheel damper attachment structure of a motorcycle. There is provided one damper, one side of which being attached to a bracket of the main frame, whereas the respective other side thereof is attached to a pivotally arranged linking mechanism. The linking mechanism is pivotally arranged at the main frame as well as is connected to the rear arm.

Also, EP 0 082 496 discloses a shock absorbing device for rear wheels of two-wheeled vehicles. The body frame comprises a pair of left and right frame bodies, wherein a damper is arranged over the width direction of the body frame. One side of the damper is directly attached to a bracket of a body frame, whereas the respective opposite side of the damper is connected to a link mechanism. The link mechanism is attached to the respective other frame body of the body frame. The linking mechanism is connected to the pivotally arranged rear arm of the two-wheeled vehicle.

Moreover, US 4,706,774 discloses a motorcycle having a main frame with a rear suspension for the rear arm of the motorcycle. The rear suspension is provided with a damper, wherein a first side of the damper is arranged on a bracket connecting the pair of left and right frame bodies of the body frame of the motorcycle. The respective other side of the damper is mounted to a linking mechanism, wherein the linking mechanism itself is mounted to the rear arm of the motorcycle.

In addition, EP 0 769 447 A1 discloses a bicycle frame, wherein a damping mechanism is provided between the main frame and the rear arm supporting the rear wheel. The damping mechanism is attached to the main frame as well as to a linking mechanism, wherein same linking mechanism itself is pivotally connected to the main frame as well as to the rear arm of the bicycle.

Additionally, EP 1 223 101 A2 discloses a vehicle frame structure for motorcycles including a particular damping structure. The damping structure on one of its sides is attached to the rear arm, whereas the respective other side of the damping structure is attached to a linking mechanism. Same linking mechanism itself is respectively connected to the rear arm as well as to the main frame.

Further, US 4,650,026 discloses a motorcycle having a body frame with one damper, wherein one end of the damper is attached to the main frame, whereas the damper on the respective other side thereof is connected to part of a linking mechanism. The linking mechanism itself is connected to the rear arm as well as to the body frame.

Moreover, US 6,131,934 discloses a bicycle rear suspension system. According to one embodiment disclosed therein, a first damper is provided between the rear arm and linking mechanism, and wherein a second damper is provided between the main frame and same damping mechanism. According to a further embodiment, a "long damper" is provided between the rear arm and the main frame.

In view of the above, it is an objective of the present invention to provide a saddle-type vehicle satisfactorily maintaining a steering stability even when a large impact force is applied to its body frame.

This objective is solved in an inventive manner by a saddle-type vehicle having the features of claim 1.

Preferred embodiments are laid down in the dependent claims.

In the following, the present invention is explained in greater detail with respect to several embodiments thereof in conjunction with the accompanying drawings, wherein:
- Fig. 1: shows a first embodiment and is a partially enlarged view of Fig. 2;
- Fig. 2: shows the first embodiment and is a side view of an entire vehicle;
- Fig. 3: shows the first embodiment and is an arrow view along line 3-3 of Fig. 1;
- Fig. 4: shows the first embodiment and is a partially enlarged cross-sectional view of Fig. 3;
- Fig. 5: shows a second embodiment and is a view corresponding to Fig. 2;
- Fig. 6: shows the second embodiment and is a partially enlarged view of Fig. 5, and is a view corresponding to Fig. 1; and
- Fig. 7: shows the second embodiment and is a view corresponding to Fig. 3.

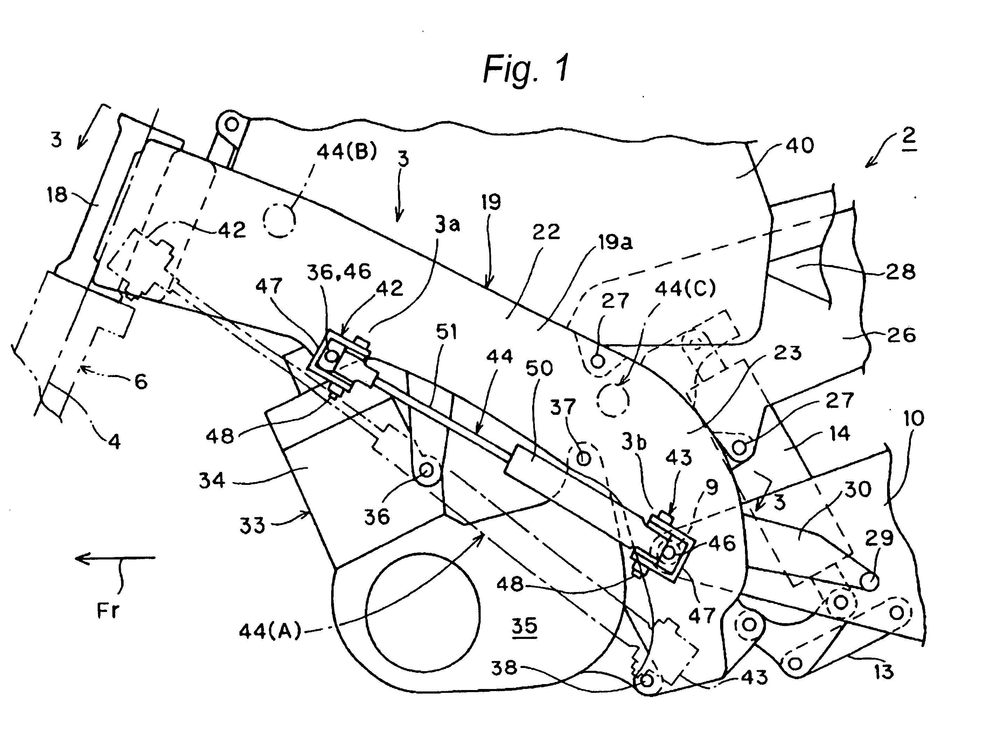

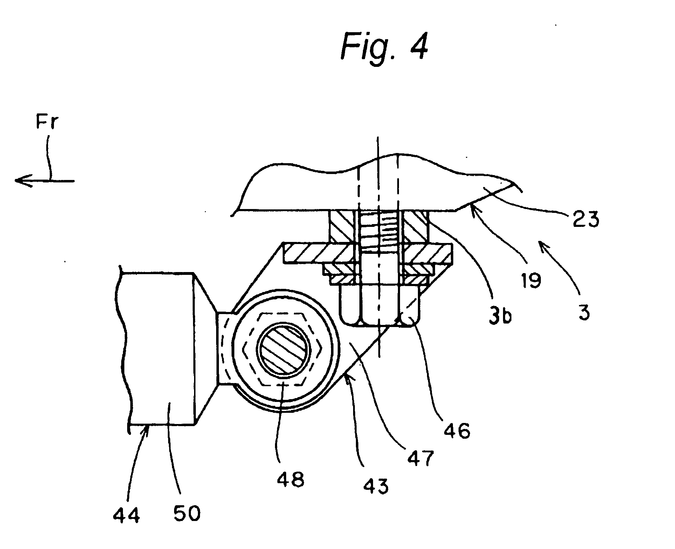

Embodiments will be described below with the drawings, wherein Figs. 1 to 4 show a first embodiment.

In Figs. 1 to 3, reference numeral 1 is a saddle-type vehicle exemplified by a two-wheeled motor vehicle, and arrow Fr represents a front direction thereof.

The vehicle 1 is disposed with a body frame 3 configuring a frame of a vehicle body 2; a front fork 6 that is supported at a front end portion of the body frame 3 so as to be steerable around a steering axis center 4 and includes a damper 5; a front wheel 8 that is rotatably supported at lower end portions of the front fork 6 by an axle 7; and an unillustrated steering handle that is supported at an upper end portion of the front fork 6.

The vehicle 1 is also disposed with a rear arm 10 that is made of a metal plate, disposed rearward of a lower portion of the body frame 3 and extends in a front-rear direction, with a front end portion of the metal plate rear arm 10 being pivotally supported at a rear lower portion of the body frame 3 by a pivot support shaft 9 so that a rear portion of the rear arm 10 is swingable up and down; a rear wheel 12 that is rotatably supported at the swinging end portion of the rear arm 10 by an axle 11; a link mechanism 13 disposed so as to bridge the rear lower portion of the body frame 3 and a front portion of the rear arm 10; and a damper 14 disposed so as to bridge a rear upper portion of the body frame 3 and the link mechanism 13. Each of the dampers 5 and 14 is of a cylinder format using a fluid. The body frame 3 is supported on a traveling road surface 15 by the front and reel wheels 8 and 12, whereby the vehicle 1 can travel forward. The vehicle 1 can travel forward when the front and rear wheels 8 and 12 make contact with a traveling road surface 15.

The body frame 3 is disposed with a head pipe 18 that configures the front end portion of the body frame 3 and supports the front fork 6; a pair of left and right frame bodies 19 that are made of metal plates, extend rearward and downward from the head pipe 18 and pivotally support, with the pivot support shaft 9, the rear arm 10 at extension portions of the frame bodies 19; and upper and lower cross members 20 and 21 that join mutual extension portions of the left and right frame bodies 19. The cross section of each frame body 19 in a longitudinal direction thereof has a long box-like shape.

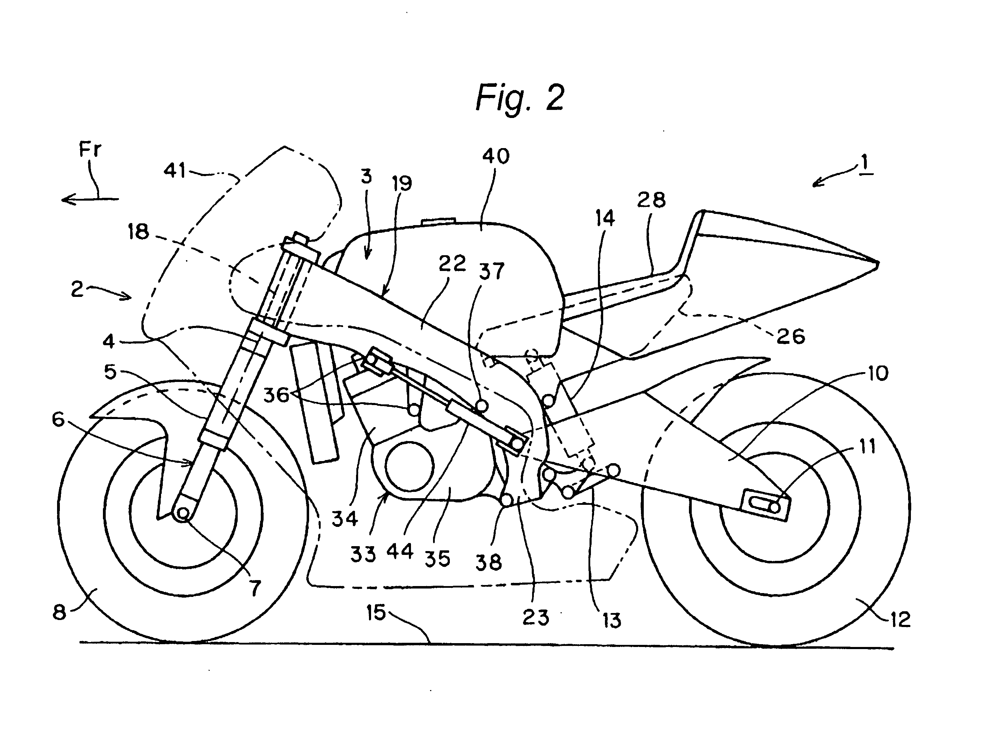

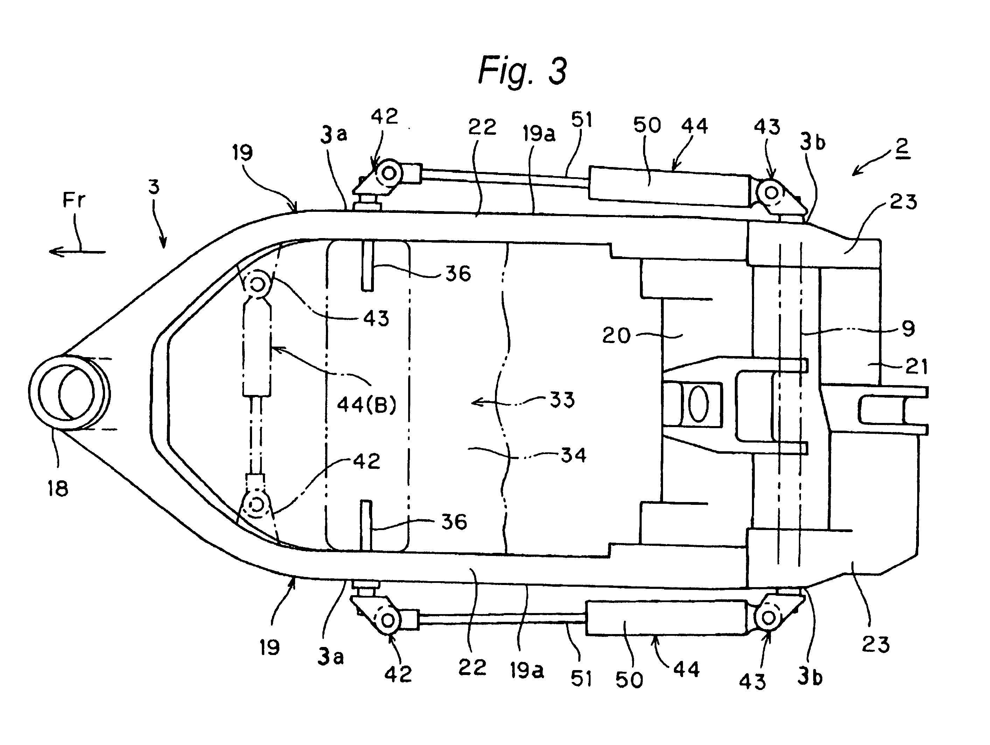

Each frame body 19 is disposed with a main frame 22, which extends substantially straightly rearward and downward from the head pipe 18 when the vehicle body 2 is seen in side view (Figs. 1 and 2), and a rear arm bracket 23, which configures the extension portion of the frame body 19 and integrally extends rearward and downward from an extension end portion of the main frame 22. The depression angle of the rear arm bracket 23 is larger than the rearward depression angle of the main frame 22. In other words, a joint portion at which the main frame 22 and the rear arm bracket 23 are mutually joined is formed as a curved portion. Also, when the vehicle body 2 is seen in plan view (Fig. 3), each main frame 22 has a curved shape that extends rearward and outward from the head pipe 18 and then extends substantially straightly rearward to become outwardly convex when the vehicle body 2 is seen in plan view.

Mutual upper portions and lower portions of the left and right rear arm brackets 23, 23 are respectively joined by the upper and lower cross members 20 and 21. The front end portion of the rear arm 10 is pivotally supported by the pivot support shaft 9 at intermediate portions, in the vertical direction, of the rear arm brackets 23, 23. One end portion of the link mechanism 13 is pivotally supported at the extension end portions (lower end portions) of the rear arm brackets 23, 23.

The body frame 3 is disposed with a seat bracket 26 that projects rearward and upward from the joint portions at which the main frames 22 and the rear arm brackets 23 are joined. A front end portion of the seat bracket 26 is fastened by fasteners 27 to the joint portions and cantilever-supported at the rear portion of the frame bodies 19 of the body frame 3, whereby a seat 28 is supported at the seat bracket 26. Foot rests 29 are disposed below a front end portion of the seat 28. The foot rests 29 are supported by brackets 30 at intermediate portions in the vertical direction of the rear arm brackets 23. A rider seated saddle-style in the seat 28 can place his/her feet on the foot rests 29, so that the rider can grip the handle in this posture.

A traveling drive-use drive device 33 of the vehicle 1 is disposed below the left and right main frames 22, 22 of the body frame 3. The drive device 33 is disposed with an internal combustion engine 34, which configures a front portion of the drive device 33, a power transmission device 35, which is positioned rearward of the internal combustion engine 34 and connected to the internal combustion engine 34, and unillustrated interlocking means such as a chain, which interlocks and couples the rear wheel 12 to the power transmission device 35.

An upper portion of the internal combustion engine 34 is supported by fasteners 36, 36 at intermediate portions, in the front-rear direction, of the main frames 22 of the frame bodies 19. A rear portion of the power transmission device 35 is supported by fasteners 37 and 38 at upper and lower end portions of the rear arm brackets 23 of the frame bodies 19. Thus, the internal combustion engine 34 is supported by the frame bodies 19 of the body frame 3. The internal combustion engine 34 itself has sufficient strength and rigidity and is supported so as to straddle the main frames 22 and the rear arm brackets 23 of the frames bodies 19 in the body frame 3. For this reason, the internal combustion engine 34 configures part of the body frame 3.

A fuel tank 40 is supported above the main frames 22 of the body frame 3, and fuel inside the fuel tank 40 is supplied to the internal combustion engine 34 of the drive device 33. 41 is a cowling.

In Figs. 1 to 4, a pair of left and right damping force generating means 44, 44, which extend in the front-rear direction and bridge portions 3a (front portions) and other portions 3b (rear portions) of outer surface sides of the frame bodies 19 in the body frame 3, with front and rear end portions that are end portions being respectively coupled by couplers 42 and 43 to the portions 3a and the other portions 3b, are disposed. The damping force generating means 44 can dampen an impact force that is applied to the body frame 3 and causes the portions 3a and other portions 3b to relatively elastically deform so that the portions 3a and the other portions 3b move towards and away from each other. The damping force generating means 44 are cylinder-format dampers that use a fluid (oil). The damping force generating means 44 extend substantially straightly and have the same shape and the same size. When an impact force is applied in one direction (tensile direction) that is the axial direction of the damping force generating means 44, or when an impact force is applied in the direction (compression direction) opposite to the one direction, the damping force generating means 44 extend or contract in the axial direction. In other words, the damping force generating means 44 can dampen the impact force by extending and contracting.

Thus, in short, a pair of left and right damping force generating means 44, which extend in the front-rear direction and bridge portions 3a (front portions) and other portions 3b (rear portions) of outer surface sides of the frame bodies 19, with front and rear end portions that are end portions of the damping force generating means being respectively coupled by couplers 42 and 43 to the frame bodies 19, are disposed in the vehicle 1. The damping force generating means 44 extend substantially straightly, have the same shape and the same size, and are cylinder-format dampers that use a fluid (oil).

Each coupler 42, 43 is disposed with a bracket 47, which is fastened by a fastener 46 and supported at outer side surfaces of the frame bodies 19, and a pivot support shaft 48, which pivotally supports the end portions of each damping force generating means 44 at the brackets 47. Each of the damping force generating means 44 is disposed with a cylinder tube 50, which configures an end portion of the damping force generating means 44 and is coupled to the other portions 3b of the frame bodies 19 by the couplers 43; an unillustrated piston, which is fitted in the cylinder tube 50 so as to be movable in an axial direction; and a piston rod 51, which extends from the piston to the outside of the cylinder tube 50, configures another end portion of the damping force generating means 44, and is coupled to the portions 3a of the frame bodies 19 by the couplers 42. Two pressure oil chambers that are partitioned by the piston inside the cylinder tube 50 communicate with each other through an orifice.

When a driving force of the internal combustion engine 34 is transmitted via the power transmission device 35 to the rear wheel 12 by the driving of the internal combustion engine 34 of the drive device 33, it is possible for the vehicle 1 to travel forward on the traveling road surface 15. Although an impact force is applied, while the vehicle 1 is traveling, to the body frame 3 from the traveling road surface 15 via the front and rear wheels 8 and 12, the front fork 6 including the damper 5, the rear arm 10, the link mechanism 13 and the damper 14, the impact force applied to the body frame 3 is alleviated by the dampers 5 and 14.

When the frame bodies 19 of the body frame 3 are elastically deformed (0.1 to. 0.2. mm) by the impact force applied to the body frame 3, so as to extend and contract in the front-rear direction (longitudinal direction), and the portions 3a and the other portions 3b move towards and away from each other (in other words: the portions 3a and the other portions 3b move towards and away from each other), the damping force generating means 44 disposed so as to bridge the frame bodies 19 extend and contract in accompaniment therewith, and the following "action and effects" arise.

That is, "action and effects" arise in that, when the damping force generating means 44 extend and contract, oil flows through the orifice from one of the two pressure oil chambers in each of the cylinder tubes 50 of the damping force generating means 44 to the other chamber, whereby the impact force is damped (alleviated) and each frame body 19 is deterred from being largely elastically deformed frontward and rearward by a reaction force generated in the longitudinal direction of the damping force generating means 44, and steering stability is satisfactorily maintained.

Thus, "action and effects" arise in that, for example, when a large impact force is applied to the body frame 3 from the traveling road surface 15 at the time of high-speed comering in a race, the frame bodies 19 of the body frame 3 try to largely elastically deform in the saddle-type vehicle 1 for which compactness and lightness are demanded, but this elastic deformation is prevented by the working of the damping force generating. means 44 and a sense of being one with the vehicle 1 is ensured for the rider. In other words, as described above, even when the impact force on the body frame 3 is large, steering stability is satisfactorily maintained.

Portions of the frame bodies 19 configuring the rear portions of the main frames 22 are linear portions 19a that extend substantially straightly and three-dimensionally. At least one portion of each of the damping force generating means 44 is disposed at lower outward vicinities of the linear portions 19a so as to extend substantially parallel to and along the linear portions 19a.

For this reason, as described above, even if the damping force generating means 44 are disposed so that steering stability is satisfactorily maintained, the damping force generating means 44 are prevented from projecting largely outward from the frame bodies 19 of the body frame 3, these 19 and 44 are disposed compactly, and the vehicle body 2 is prevented from becoming large.

Here, the portions 3a of the frame bodies 19 of the body frame 3 are positioned near support portions of the internal combustion engine 34 of the drive device 33, and the other portions 3b are positioned near pivot support portions of the rear arm 10. The support portions of the internal combustion engine 34 of the drive device 33 are portions at which the impact force from the drive device 33 is inputted. The pivot support portions of the rear arm 10 are portions at which the impact force is inputted from the rear wheel 12. Moreover, portions of the frame bodies 19 between the portions 3a and the other portions 3b include the curved portions.

For this reason, the portions of the frame bodies 19 between the portions 3a and the other portions 3b tend to be elastically deformed by the impact force, so that they bend up and down and left and right. In other words, the portions 3a and the other portions 3b tend to be elastically deformed so that they move towards and away from each other. However, the damping force generating means 44 disposed so as to bridge the frame bodies 19 extend and contract with the elastic deformation, whereby the "action and effects" are more reliably achieved.

Because the damping force generating means 44 are disposed at the outer sides of the frame bodies 19 and are disposed so as to bridge the frame bodies 19, when the portions of the frame bodies 19 between the portions 3a and the other portions 3b are elastically deformed and extend and contract so that they bend left and right, the damping force generating means 44 extend and contract more largely than the extension and contraction of the portions of the frame bodies 19, whereby the "action and effects" are even more reliably achieved.

The fasteners 36 that support the internal combustion engine 34 of the drive device 33 at the frame bodies 19 and the fasteners 46 of the couplers 42 are mutually shared, whereby the configuration is simplified. Also, the fasteners 46 of the couplers 43 are disposed on an axial center of the pivot support shaft 9.

As shown by the single-dot chain line in Fig. 1, the portions 3a may serve as the front end portions of the frame bodies 19 near the head pipe 18 and the other portions 3b may serve as the extension end portions of the frame bodies 19, so that damping force generating means 44(A) may be disposed so as to bridge the frame bodies 19.

Here, the front end portions of the frame bodies 19 are portions at which a large impact force is inputted from the outside via the front fork 6 from the front wheel 8, the extension end portions of the frame bodies 19 are portions at which a large impact force is inputted from the rear arm 10 and the drive device 33, and the portions of the frame bodies 19 between the portions 3a and the other portions 3b include the curved portions.

For this reason, the portions of the frame bodies 19 between the portions 3a and the other portions 3b tend to be elastically deformed by the impact force, so that they largely bend up and down and left and right. In other words, the portions 3a and the other portions 3b tend to be elastically deformed so that they move towards and away from each other. However, the damping force generating means 44(A) disposed so as to bridge the frame bodies 19 extend and contract with the elastic deformation, whereby the "action and effects" are more reliably achieved.

Also, as shown by the single-dot chain line in Figs. 1 and 2, damping force generating means 44(B) may be disposed so as to extend in the width direction of the vehicle 1, the damping force generating means 44(B) may be disposed so as to bridge the front portions of the left and right frame bodies 19, 19 (intermediate portions in the longitudinal direction of the main frames 22) of the body frame 3, and end portions of the damping force generating means 44(B) may be coupled by the couplers 42 and 43 to the portion 3a of one frame body 19 of the left and right frame bodies 19, 19 and to the other portion 3b of the other frame body 19.

Here, the left and right frame bodies 19, 19 have curved shapes that are outwardly convex when the vehicle body 2 is seen in plan view, their cross sections are long shapes, and they are respectively and separately elastically deformed by the impact force, so that they easily bend in the width direction of the vehicle body 2. Additionally, when the left and right frame bodies 19, 19 are elastically deformed so that they largely move towards and away from each other, the portions 3a and the other portions 3b largely move towards and away from each other in accompaniment with this elastic deformation, whereby the damping force generating means 44(B) disposed so as to bridge the left and right frame bodies 19, 19 extend and contract, whereby the "action and effects" are effectively achieved.

It should be noted that, as shown by the single-dot chain line in Fig. 1, damping force generating means 44(C) extending in the width direction of the vehicle 1 may also be disposed so as to bridge the curved portions of the left and right frame bodies 19.

Although the above depends on the illustrated example, the vehicle 1 may be a three-wheeled motor vehicle or a four-wheeled motor vehicle as long as it is a saddle type. Also, the damping force generating means 44 may be disposed in internal spaces of the frame bodies 19 whose cross sections are of a box-like shape, and may be disposed to bridge the portions 3a and the other portions 3b of inner surface sides of the frame bodies 19. Also, these portions 3a and other portions 3b may also be portions of upper and lower surfaces, regardless of whether they are disposed at the outer or inner surface sides of the frame bodies 19. Also, the end portion (front end portion) of the damping force generating means 44 may be coupled to the front portion of one of the left and right frame bodies 19, 19 and the other end portion (rear end portion) of the damping force generating means 44 may be coupled to the rear portion of the other frame body 19. Also, the frame bodies 19 may be a single body extending rearward from the head pipe 18 and may be configured by a simple circular pipe. In this case, the damping force generating means 44 may also be made singular.

Also, an end portion of the damping force generating means 44 may be coupled to the head pipe 18 and the other end portion may be coupled to one of the cross members 20 and 21. In this case, the head pipe 18 and the cross member 20 function as a partial configuration of the couplers 42 and 43.

Also, the damping force generating means 44 may be means where the piston frictionally slides with respect to the cylinder tube 50 without using a fluid. Also, the damping force generating means 44 may include a rubber-made elastic body that is vulcanized and adhered to the cylinder tube 50 and the piston rod 51 and in which sheering stress is generated on the basis of the impact force, with the cylinder tube 50 and the piston rod 51 being mutually joined together by the elastic body, without using a fluid and a piston.

Moreover, the damping force generating means 44 may be disposed with a damper body, in which a fluid is used in a rotary format supported at the portions 3a of the frame bodies 19, and an interlocking rod that couples the damper body and the other portions 3b of the frame bodies 19.

The description above discloses (amongst others) a body frame damping structure in a saddle-type vehicle including: a front fork 6 steerably supported at a front end portion of a body frame 3; a front wheel 8 supported at lower end portions of the front fork 6; a rear arm 10 pivotally supported at a rear portion of the body frame 3 by a pivot support shaft 9 so as to be swingable up and down; and a rear wheel 12 supported at a swinging end of the rear arm 10, the body frame 3 including a head pipe 18, which configures the front end portion of the body frame 3 and supports the front fork 6, and a frame body 19, which extends rearward and downward from the head pipe 18 and pivotally supports the rear arm 10 at extension portions of the frame body 19, wherein damping force generating means 44 is (are) disposed so as to bridge portion 3a of the frame body 19 with other portion 3b of the frame body 19, with end portions of the damping force generating means 44 being coupled to the frame body 19.

For this reason, when the frame bodies of the body frame are elastically deformed by the impact force applied to the body frame, the impact force is alleviated in accompaniment therewith by the damping force generating means bridging the frame bodies, the frame bodies are deterred from being largely elastically deformed by a reaction force generated in the longitudinal direction of the damping force generating means, and steering stability is satisfactorily maintained.

Moreover, because the damping force generating means are disposed so as to bridge the outer side surfaces of the frame bodies, they can be disposed regardless of the cross-sectional shape of the frame bodies, the degree of freedom of their disposal is improved, and it also becomes possible to dispose them later with respect to existing body frames.

. Said embodiment of the body frame damping structure in a saddle-type vehicle may be further improved in that the frame body 19 is disposed with linear portion 19a that extend substantially straightly and the damping force generating means 44 is disposed at outward vicinities of the linear portion 19a so as to extend along the linear portion 19a.

For this reason, as described above, even if the damping force generating means are disposed so that steering stability is satisfactorily maintained, the damping force generating means are prevented from projecting largely outward from the frame bodies of the body frame, these are disposed compactly, the vehicle body is prevented from becoming large, and the damping force generating means are prevented from becoming an obstacle for a rider.

The above embodiments of the body frame damping structure in a saddle-type vehicle may be further improved in that the frame body 19 comprises a pair of left and right frame bodies 19, 19 and damping force generating means 44 is disposed so as to extend in a width direction of the vehicle and bridge the left and right frame bodies 19, 19, with end portions of the damping force generating means 44 being coupled to the frame bodies 19, 19.

Here, because the left and right frame bodies are respectively and separately elastically deformed by the impact force so that they bend, they tend to largely move towards and away from each other. However, the portions and the other portions largely move towards and away from each other in accompaniment therewith, and the damping force generating means disposed so as to bridge the left and right frame bodies extends and contracts, whereby the above-discussed effects are effectively achieved.

Thus, in short, the description above discloses (amongst other) to ensure that a body frame is more reliably deterred from greatly elastically deforming so that steering stability can be satisfactorily maintained when a large impact force is applied to the body frame while a vehicle is traveling by means of a vehicle 1 which is disposed with a front fork 6 that is steerably supported at a front end portion of a body frame 3; a front wheel 8 that is supported at the front fork 8; a rear arm 10 that is pivotally supported at a rear portion of the body frame 3 by a pivot support shaft 9 so as to be swingable up and down; and a rear wheel 12 that is supported at a swinging end of the rear arm 10. The body frame 3 is disposed with a head pipe 18, which configures a front end portion thereof and supports the front fork 6, and a frame body 19, which extends rearward and downward from the head pipe 18 and pivotally supports the rear arm 10 at extension portions thereof. Damping force generating means 44 are disposed so as to bridge portions 19a and other portions 19b of the frame body 19, with end portions of the damping force generating means 44 being coupled to the frame body 19.

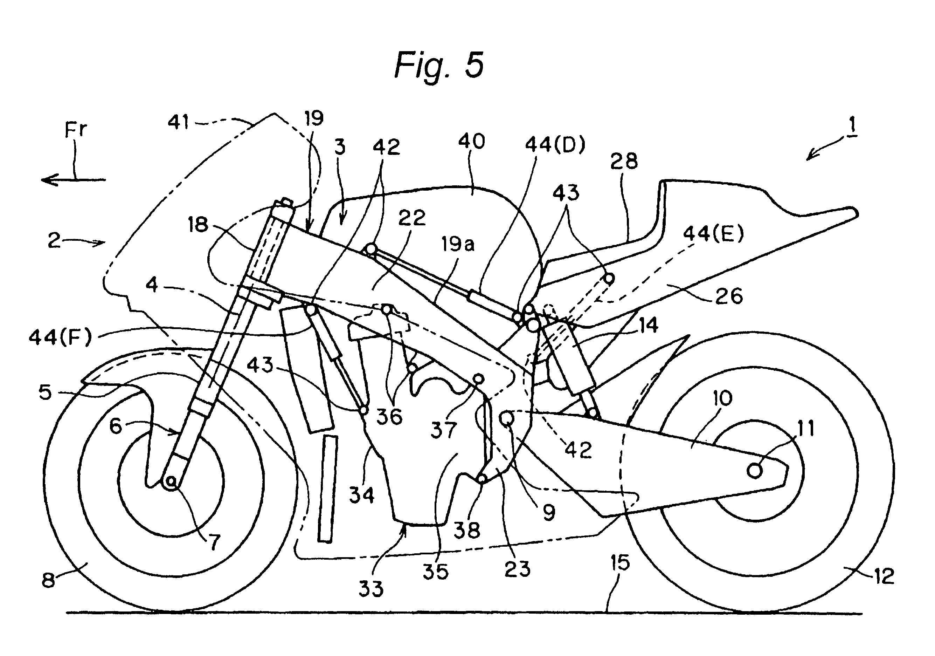

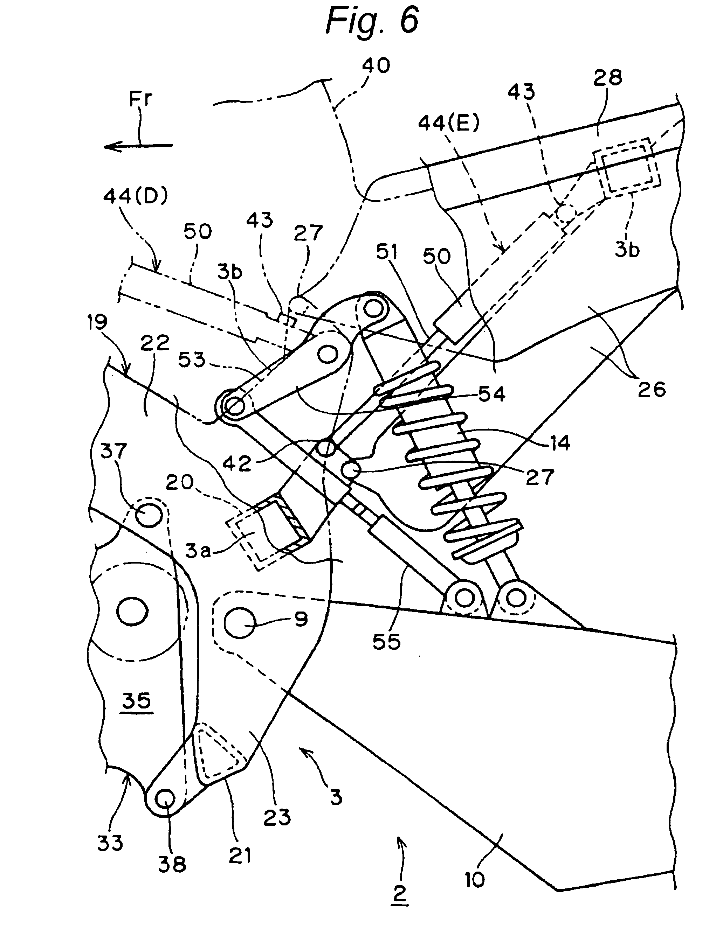

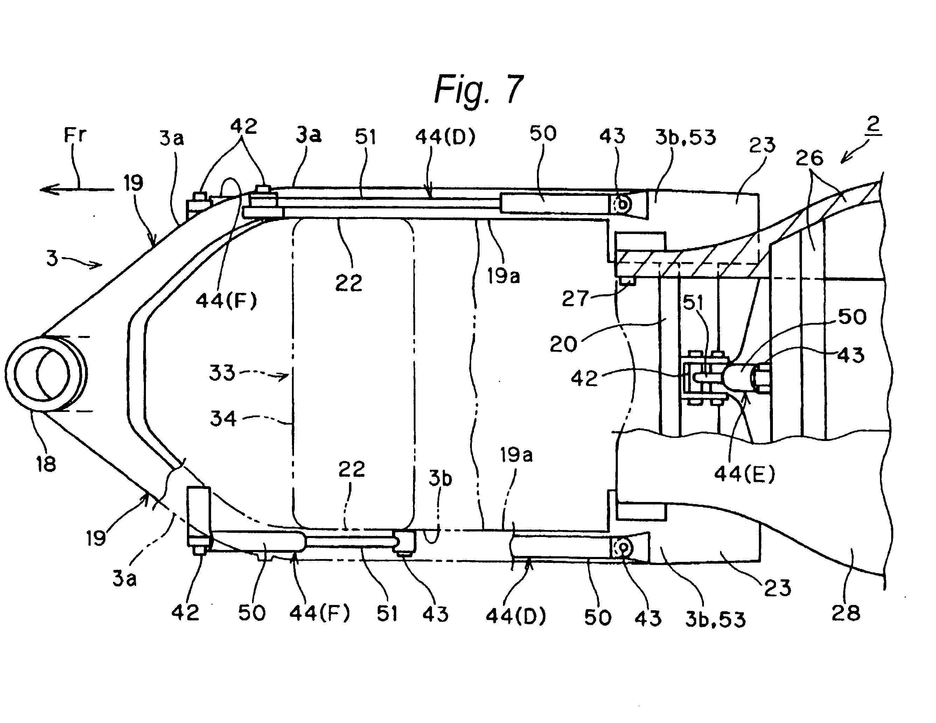

Figs. 5 to 7, which will be described below, show a second embodiment. In this embodiment, many points are shared in common with the first embodiment in terms of configuration, action and effects. Thus, with respect to these points shared in common, common reference numerals will be given to the drawings, overlapping description thereof will be omitted, and description will be given mainly in regard to points of difference. Also, in light of the object, and the action and effects, the configurations of portions in these embodiments may be variously combined.

Figs. 5 to 7 show the second embodiment.

According to this, the damper 14 is disposed as a left and right pair. The body frame 3 is disposed with brackets 53 that are respectively disposed so as to protrude upward from the joint portions at which the rear end portions of the main frames 22 and the upper end portion of the rear arm brackets 23 are joined. Intermediate portions of swinging arms 54 that respectively extend in the front-rear direction with respect to protruding end portions of the left and right brackets 53 are pivotally supported, upper end portions of the dampers 14 are pivotally supported at end portions (rear end portions) of the swinging arms 54, and lower end portions of the dampers 14 are pivotally supported at the rear arms 10. Also, turn buckle-format regulation bars 55, which are respectively disposed forward of the dampers 14, extend along the dampers 14, and whose respective lengths are adjustable in the axial direction, are disposed. Additionally, upper end portions of the regulation bars 55 are pivotally supported at other end portions (front end portions) of the swinging arms 54, and lower end portions of the regulation bars 55 are pivotally supported at the rear arm 10. By adjusting the lengths of the regulation bars 55, damper characteristics of the dampers 14 are possible.

A pair of left and right damper force generating means 44(D), which extend in the front-rear direction, are disposed so as to bridge the portions 3a (front portions) and the other portions 3b (rear portions) of the outer surface sides of the frame bodies 19 in the body frame 3, and are respectively coupled by the couplers 43, 43 to the portions 3a and the portions 3b, is disposed.

The damping force generating means 44(D) are positioned near upper portions of linear portions 19a of the main frames 22 of the frame bodies 19. For this reason, even if the damping force generating means 44(D) are disposed, the width dimension of the vehicle body 2 is prevented from becoming larger, which is particularly beneficial with respect to the saddle-type vehicle 1 for which a compact width dimension of the vehicle body 2 is demanded.

Also, damping force generating means 44(E), which are disposed so as to bridge the frame bodies 19 and the seat bracket 26 via the upper cross member 20 and are respectively coupled by the couplers 42 and 43 to the frame bodies 19 and the seat bracket 26, are disposed.

Here, the seat bracket 26 supporting the seat 28 projects from the frame bodies 19 and is cantilever-supported. When an impact force is applied to the body frame 3, the seat bracket 26 is elastically deformed more than other portions and tends to be largely relatively displaced with respect to the frame bodies 19. However, in this case, the damping force generating means 44(E) extend and contract, whereby the "action and effects" are more reliably achieved.

Also, a pair of left and right damping force generating means 44(F), 44(F), which are disposed so as to bridge the frame bodies 10 and the internal combustion engine 34 and are respectively coupled by the couplers 42 and 43 to the frame bodies 19 and the internal combustion engine 34, is disposed.

Here, there is a large difference - particularly with respect to weight, specific gravity and rigidity - between the internal combustion engine 34 and the frame bodies 19 of the body frame 3. Thus, when an impact force is applied to the body frame 3, the frame bodies 19 tend to be largely elastically deformed in comparison to the internal combustion engine 34 and more largely relatively displaced with respect to the internal combustion engine 34. However, in this case, the damping force generating means 44(F) extend and contract, whereby the "action and effects" are more reliably achieved.

Although the above depends on the illustrated example, it is not necessary to dispose all of the damping force generating means 44(D-F) at the same time.

The description above discloses (amongst others) a body frame damping structure in a saddle-type vehicle including: a front fork steerably supported at a front end portion of a body frame; a front wheel supported at lower end portions of the front fork; a rear arm pivotally supported at a rear portion of the body frame by a pivot support shaft so as to be swingable up and down; and a rear wheel supported at a swinging end of the rear arm, wherein damping force generating means are disposed so as to bridge portions of the body frame with other portions of the body frame, with the damping force generating means being respectively coupled to the portions and the other portions.

As exemplified in all of the drawings with regard to this embodiment, there is provided a body frame damping structure in a saddle-type vehicle including: a front fork 6 steerably supported at a front end portion of a body frame 3; a front wheel 8 supported at lower end portions of the front fork 6; a rear arm 10 pivotally supported at a rear portion of the body frame 3 by a pivot support shaft 9 so as to be swingable up and down; and a rear wheel 12 supported at a swinging end of the rear arm 10, wherein damping force generating means 44 are disposed so as to bridge portions 3a of the body frame with other portions 3b of the body frame 3, with the damping force generating means being respectively coupled to the portions 3a and the other portions 3b.

For this reason, when the body frame is elastically deformed by the impact force applied to the body frame at the time the vehicle is traveling, the impact force is damped by the damping force generating means bridging the body frame, and the body frame is deterred from being largely elastically deformed by a reaction force generated in the damping force generating means.

Thus, for example, when a large impact force is applied to the body frame from a traveling road surface at the time of high-speed cornering in a race, the body frame tries to largely elastically deform in the saddle-type vehicle for which compactness and lightness are demanded, but this elastic deformation is prevented by the working of the damping force generating means and a sense of being one with the vehicle is ensured for the rider. In other words, as described above, even when the impact force on the body frame is large, steering stability is satisfactorily maintained.

The above described embodiment of the body frame damping structure in a saddle-type vehicle may be further improved in that the body frame includes a head pipe, which configures the front end portion of the body frame and supports the front fork, and a frame body, which extends rearward and downward from the head pipe and pivotally supports the rear arm at extension portions of the frame body, the frame body being disposed with linear portions that extend substantially straightly and the damping force generating means are disposed at outward vicinities of the linear portions so as to extend along the linear portions.

Thus, as exemplified in all of the drawings, the body frame 3 may include a head pipe 18, which configures the front end portion of the body frame and supports the front fork 6, and a frame body 19, which extends rearward and downward from the head pipe 18 and pivotally supports the rear arm 10 at extension portions of the frame body 19, wherein the frame body 19 may be disposed with linear portions 19a that extend substantially straightly and wherein the damping force generating means 44 may be disposed at outward vicinities of the linear portions 19a so as to extend along the linear portions 19a.

Therein, the body frame includes a head pipe, which configures the front end portion of the body frame and supports the front fork, and a frame body, which extends rearward and downward from the head pipe and pivotally supports the rear arm at extension portions of the frame body, the frame body being disposed with linear portions that extend substantially straightly and the damping force generating means are disposed at outward vicinities of the linear portions so as to extend along the linear portions.

For this reason, as described above, even if the damping force generating means are disposed so that steering stability is satisfactorily maintained, the damping force generating means are prevented from projecting largely outward from the frame bodies of the body frame, these are disposed compactly, the vehicle body is prevented from becoming large, and the damping force generating means are prevented from becoming an obstacle to a rider, which is particularly beneficial to a saddle-type vehicle.

Moreover, because the damping force generating means are disposed so as to bridge outer portions of the frame bodies, firstly, they can be disposed regardless of the cross-sectional shape of the frame bodies, the degree of freedom of their disposal is improved, and it also becomes possible to dispose them later with respect to existing body frames. Also, secondly, when the damping force generating means are disposed, constraints attendant to the cross-sectional shape of the body frame can be avoided and molding of the body frame can be easily achieved.

The afore-described body frame damping structure in a saddle-type vehicle may be further improved in that the frame body comprises a pair of left and right frame bodies and damping force generating means is disposed so as to extend in a width direction of the vehicle and bridge the left and right frame bodies, with the damping force generating means being coupled to the frame bodies.

Thus, as exemplified in Figs. 1 to 4, the frame body comprises a pair of left and right frame bodies 19 and damping force generating means is disposed so as to extend in a width direction of the vehicle 1 and bridge the left and right frame bodies 19, 19, with the damping force generating means 44 being coupled to the frame bodies 19, 19.

Here, the left and right frame bodies are respectively and separately elastically deformed by the impact force so that they bend and tend to largely move towards and away from each other. However, in this case, the damping force generating means disposed so as to bridge the left and right frame bodies extends and contracts, whereby the afore-discussed action and effects are reliably achieved.

According to a preferred embodiment, there is provided a body frame damping structure in a saddle-type vehicle including: a front fork steerably supported at a front end portion of a body frame; a front wheel supported at lower end portions of the front fork; a rear arm pivotally supported at a rear portion of the body frame by a pivot support shaft so as to be swingable up and down; and a rear wheel supported at a swinging end of the rear arm, the body frame including a head pipe, which configures the front end portion of the body frame and supports the front fork, a frame body, which extends rearward and downward from the head pipe and pivotally supports the rear arm at extension portions of the frame body, and a seat bracket, which projects rearward from the frame body and supports a seat, wherein damping force generating means are disposed so as to bridge the frame body and the seat bracket, with the damping force generating means being respectively coupled to the frame body and the seat bracket.

Thus, as exemplified in Figs. 5 to 7, the body frame damping structure in a saddle-type vehicle includes: a front fork 6 steerably supported at a front end portion of a body frame 3; a front wheel 8 supported at lower end portions of the front fork 6; a rear arm 10 pivotally supported at a rear portion of the body frame 3 by a pivot support shaft 9 so as to be swingable up and down; and a rear wheel 12 supported at a swinging end of the rear arm 10, the body frame including a head pipe 18, which configures the front end portion of the body frame 3 and supports the front fork 6, a frame body 19, which extends rearward and downward from the head pipe 18 and pivotally supports the rear arm 10 at extension portions of the frame body 19, and a seat bracket 26, which projects rearward from the frame body 19 and supports a seat 28, wherein damping force generating means 44 are disposed so as to bridge the frame body 19 and the seat bracket 26, with the damping force generating means being respectively coupled to the frame body 19 and the seat bracket 26.

Here, the seat bracket supporting the seat projects from the frame bodies and is cantilever-supported. When the impact force is applied to the body frame, the seat bracket is elastically deformed more than other portions and tends to be largely relatively displaced with respect to the frame bodies. However, in this case, the damping force generating means extends and contracts, whereby the afore-discussed action and effects are achieved.

According to a further preferred embodiment, there is provided a body frame damping structure in a saddle-type vehicle including: a front fork steerably supported at a front end portion of a body frame; a front wheel supported at lower end portions of the front fork; a rear arm pivotally supported at a rear portion of the body frame by a pivot support shaft so as to be swingable up and down; and a rear wheel supported at a swinging end of the rear arm, the body frame including a head pipe, which configures the front end portion of the body frame and supports the front fork, a frame body, which extends rearward and downward from the head pipe and pivotally supports the rear arm at extension portions of the frame body, and an internal combustion engine, which is supported at the frame body and is interlocked and coupled with the rear wheel, wherein damping force generating means are disposed so as to bridge the frame body and the internal combustion engine, with the damping force generating means being respectively coupled to the frame body and the internal combustion engine.

Thus, as exemplified in Figs. 5 to 7, the body frame damping structure in a saddle-type vehicle includes: a front fork 6 steerably supported at a front end portion of a body frame 3; a front wheel 8 supported at lower end portions of the front fork 6; a rear arm 10 pivotally supported at a rear portion of the body frame 3 by a pivot support shaft 9 so as to be swingable up and down; and a rear wheel 12 supported at a swinging end of the rear arm 10, the body frame 3 including a head pipe 18, which configures the front end portion of the body frame 19 and supports the front fork 6, a frame body, which extends rearward and downward from the head pipe 18 and pivotally supports the rear arm 10 at extension portions of the frame body, and an internal combustion engine 34, which is supported at the frame body 19 and is interlocked and coupled with the rear wheel 12, wherein damping force generating means 44 are disposed so as to bridge the frame body 19 and the internal combustion engine 34, with the damping force generating means being respectively coupled to the frame body 19 and the internal combustion engine 34.

Here, there is a large difference - particularly with respect to weight, specific gravity and rigidity - between the intemal combustion engine and the frame bodies of the body frame. Thus, when an impact force is applied to the body frame, the frame bodies tend to be largely elastically deformed in comparison to the internal combustion engine and more largely relatively displaced with respect to the internal combustion engine. However, in this case, the damping force generating means extend and contract, whereby the afore-discussed action and effects are achieved.

The body frame damping structure in a saddle-type vehicle may be still further improved in that the damping force generating means damp an impact force applied in one direction with respect to the damping force generating means and an impact force applied in a direction opposite to the one direction.

Thus, as exemplified in all of the drawings, the damping force generating means 44 damp an impact force applied in one direction to the damping force generating means 44 and an impact force applied in a direction opposite to the one direction.

For this reason, the damping force generating means damp impact forces in both of one direction with respect to the damping force generating means and the direction opposite thereto, and more effectively suppress elastic deformation of the body frame. Thus, the afore-discussed action and effects are reliably achieved.

Thus, in short, to ensure that, in a case where an impact force applied to a body frame from a traveling road surface during travel of a vehicle is to be damped by elastic deformation of the body frame, the body frame is deterred from greatly elastically deforming so that steering stability can be satisfactorily maintained when a large impact force is applied to the body frame, there is provided a vehicle 1 which is disposed with a front fork 6 that is steerably supported at a front end portion of a body frame 3; a front wheel 8 that is supported at the front fork 6; a rear arm 10 that is pivotally supported by a pivot support shaft 9 at a rear portion of the body frame 3 so as to be swingable up and down; and a rear wheel 12 that is supported at a swinging end of the rear arm 10. Damping force generating means 44 are disposed so as to bridge portions 3a and other portions 3b of the body frame 3, with the damping force generating means 44 being respectively coupled to the portions 3a and the other portions 3b.

As discussed above, the description refers to a saddle-type vehicle having a vehicle body with a body frame and a rear arm supporting said saddle, wherein the body frame is provided with a body frame damping structure comprising at least one damping force generating means connecting two portions of the body frame.

With the above saddle-type vehicle, it is ensured that, in a case where an impact force applied to a body frame from a traveling road surface during travel of a vehicle is to be alleviated (damped) by elastic deformation of the body frame, the body frame is more reliably deterred from greatly elastically deforming regardless of the cross-sectional shape of the body frame so that steering stability can be satisfactorily maintained when a large impact force is applied to the body frame. Moreover, it is ensured that molding of the body frame can be achieved easily even in such a case.

It is preferable that the at least one damping force generating means is respectively coupled with its end portions to first and second portions of the body frame and bridges said first and second portions.

Further preferably, the body frame includes at least one frame body, which extends rearward and downward from a front end portion of the body frame and pivotally supports the rear arm at extension portions thereof.

Still further preferably, a pivot support shaft pivotally supporting the rear arm at a rear portion of the body frame for swinging movement of the rear arm and a rear wheel supported at a swinging end of the rear arm and/or a head pipe, which configures the front end portion of the body frame and steerably supports a front fork are provided.

Beneficially, the damping force generating means is disposed in an internal space of the frame body, said frame body in particular having a box-like shape.

Further beneficially, the body frame comprises a pair of frame bodies, both extending substantially straightly rearward and downward from the front end portion of the body frame and being connected via at least one cross member.

Moreover, the at least one frame body may be provided with a substantially straight linear portion, wherein the at least one damping force generating means is disposed at a vicinity of the linear portion so as to extend along the linear portion.

Additionally, a pair of damping force generating means extending in the front-rear direction of the vehicle and bridging front portions and rear portions of the at least one frame body in the body frame may be provided, with front and rear end portions thereof being respectively coupled by coupling means to the front and rear portions.

Furthermore, a pair of frame bodies may be provided, wherein a pair of left and right damping force generating means may be arranged to bridge the first and second portions on inner, outer, lower or upper surface sides of the frame bodies respectively.

It may further be preferred if the front portions of each frame body of the body frame is positioned near or at support portions of an internal combustion engine of an drive device, and the rear portions of each frame body is positioned near or at pivot support portions of the rear arm or the front portions are front end portions of the frame bodies near or at the head pipe and the rear portions are extension end portions of the frame bodies.

According to a preferred embodiment, at least one damping force generating means extending in a width direction of the vehicle and bridging the pair of frame bodies is provided, said damping force generating means being coupled to both frame bodies, respectively.

According to a further preferred embodiment, a seat bracket is provided, which projects rearward from the at least one frame body and supports a seat, wherein at least one damping force generating means is disposed to bridge the frame body and the seat bracket, with the damping force generating means being respectively coupled to the frame body and the seat bracket.

According to still another preferred embodiment, an internal combustion engine supported at the frame body is provided, wherein at least one damping forcs generating means is disposed so as to bridge the at least one frame body and the internal combustion engine, with the damping force generating means being respectively coupled to the frame body and the internal combustion engine.

In addition to the above, the damping force generating means may damp an impact force applied in either direction with respect to the damping force generating means.

## Claims

1. Saddle-type vehicle (1) having a vehicle body (2) with a body frame (3) including a frame body (19), a rear arm (10), and a seat bracket (26) supporting said saddle, wherein the frame body (19) is provided with a body frame damping structure comprising at least one damping force generating means (44),
**characterized in that**
the damping force generating means (44) is respectively coupled with its end portions to couplers (42,43), said couplers (42,43) being respectively attached to first and second portions (3a,3b) of the frame body (19), wherein said damping force generating means is configured to bridge said first and second portions (3a,3b) of the body frame (3).

2. Saddle-type vehicle (1) according to claim 1, **characterized in that** the at least one frame body (19) extends rearward and downward from a front end portion of the body frame (3) and pivotally supports the rear arm (10) at extension portions (23) thereof.

3. Saddle-type vehicle (1) according to claim 1 or 2, **characterized by** a pivot support shaft (9) pivotally supporting the rear arm (10) at a rear portion of the body frame (3) for swinging movement of the rear arm (10) and a rear wheel (12) supported at a swinging end of the rear arm (10).

4. Saddle-type vehicle according to at least one of the preceding claims 1 to 3, **characterized by** a head pipe (18), which configures the front end portion of the body frame (3) and steerably supports a front fork (6).

5. Saddle-type vehicle (1) according to at least one of the preceding claims 1 to 4, **characterized in that** the damping force generating means (44) is disposed in an internal space of the at least one frame body (19), said frame body in particular having a box-like shape.

6. Saddle-type vehicle (1) according to at least one of the preceding claims 1 to 5, **characterized in that** the body frame (3) comprises a pair of frame bodies (19,19), both extending substantially straightly rearward and downward from the front end portion of the body frame (3) and being connected via at least one cross member (20,21).

7. Saddle-type vehicle (1) according to at least one of the preceding claims 1 to 6, **characterized in that** the at least one frame body (19) is provided with a substantially straight linear portion (19a), wherein the at least one damping force generating means (44A) is disposed at a vicinity of the linear portion (19a) so as to extend along the linear portion (19a).

8. Saddle-type vehicle (1) according to at least one of the preceding claims 1 to 7, **characterized by** a pair of damping force generating means (44A, 44A) both extending in the front-rear direction of the vehicle and bridging front portions (3a) and rear portions (3b) of the at least one frame body (19) in the body frame (3), with front and rear end portions thereof being respectively coupled by coupling means (42,43) to the front and rear portions (3a,3b).

9. Saddle-type vehicle (1) according to at least one of the preceding claims 6 to 8, **characterized in that** a pair of frame bodies (19,19) are provided, wherein a pair of left and right damping force generating means (44A,44A) are arranged to bridge the first and second portions (3a,3b) on inner, outer, lower or upper surface sides of the frame bodies (19,19), respectively.

10. Saddle-type vehicle (1) according to at least one of the preceding claims 6 to 9, **characterized in that** the front portions (3a) of each frame body (19) of the body frame (3) is positioned near or at support portions of an internal combustion engine (34) of an drive device (33), and the rear portions (3b) of each frame body (19) is positioned near or at pivot support portions of the rear arm (10).

11. Saddle-type vehicle (1) according to at least one of the preceding claims 6 to 9, **characterized in that** the front portions (3a) of each frame body (19) of the body frame (3) are front end portions of the frame bodies 19 near or at the head pipe 18 and the rear portions (3b) are extension end portions of the frame bodies (19).

12. Saddle-type vehicle (1) according to at least one of the preceding claims 6 to 11, **characterized by** at least one damping force generating means (44B,44C) extending in a width direction of the vehicle (1) and bridging the pair of frame bodies (19,19), said damping force generating means (44B,44C)) being coupled to both frame bodies (19,19), respectively.

13. Saddle-type vehicle (1) according to at least one of the preceding claims 1 to 12, **characterized in that** the seat bracket (26) projects rearward from the at least one frame body (19) and supports the seat (28), wherein at least one damping force generating means (44E) is disposed to bridge the frame body (19) and the seat bracket (26), with the damping force generating means (44E) being respectively coupled to the frame body (19) and the seat bracket (26).

14. Saddle-type vehicle (1) according to at least one of the preceding claims 1 to 13, **characterized by** an internal combustion engine (34) supported at the frame body (3), wherein at least one damping force generating means (44F) is disposed so as to bridge the at least one frame body (19) and the internal combustion engine (34), with the damping force generating means (44F) being respectively coupled to the frame body (19) and the internal combustion engine (34).

15. Saddle-type vehicle (1) according to at least one of the preceding claims 1 to 14, **characterized in that** the damping force generating means damp an impact force applied in either direction with respect to the damping force generating means.

## Patentansprüche

1. Fahrzeug (1) vom Satteltyp, das eine Fahrzeugkarosserie (2) mit einem Karosserierahmen (3) hat, der einen Rahmengrundkörper (19), einen hinteren Arm (10) und einen Sitzhalter (26) hat, der den Sattel trägt, wobei der Rahmengrundkörper (19) mit einem Karosserierahmen- Dämpfungsaufbau versehen ist, der zumindest eine Dämpfungskraft- Erzeugungseinrichtung (44) aufweist,
**dadurch gekennzeichnet, dass**
die Dämpfungskraft- Erzeugungseinrichtung (44) jeweils mit ihren Endabschnitten mit Kupplungselementen (42, 43) gekuppelt ist, wobei die Kupplungselemente (42, 43) jeweils mit ersten und zweiten Abschnitten (3a, 3b) des Rahmengrundkörpers (19) verbunden sind, wobei die Dämpfungskraft- Erzeugungseinrichtung aufgebaut ist, den ersten und den zweiten Abschnitt (3a, 3b) des Karosserierahmens (3) zu überbrücken.

2. Fahrzeug (1) vom Satteltyp nach Anspruch 1, **dadurch gekennzeichnet, dass** sich der zumindest eine Rahmengrundkörper (19) nach hinten und nach unten von einem vorderen Endabschnitt des Karosserierahmens (3) erstreckt und den hinteren Arm (10) an Verlängerungsabschnitten (23) desselben schwenkbar lagert.

3. Fahrzeug (1) vom Satteltyp nach Anspruch 1 oder 2, **gekennzeichnet durch** eine Schwenklagerwelle (9), die den hinteren Arm (10) an einem hinteren Abschnitt des Karosserierahmens (3) für eine Schwenkbewegung des hinteren Arms (10) schwenkbar lagert und ein Hinterrad (12), gelagert an einem Schwenkende des hinteren Arms (10).

4. Fahrzeug (1) vom Satteltyp nach zumindest einem der vorhergehenden Ansprüche 1 bis 3, **gekennzeichnet durch** ein Kopfrohr (18), das den vorderen Endabschnitt des Karosserierahmens (3) bildet und eine Vordergabel (6) steuerbar lagert.

5. Fahrzeug (1) vom Satteltyp nach zumindest einem der vorhergehenden Ansprüche 1 bis 4, **dadurch gekennzeichnet, dass** eine Dämpfungskraft- Erzeugungseinrichtung (44) in einem Innenraum des zumindest einen Rahmengrundkörpers (19) angeordnet ist, wobei der Rahmengrundkörper insbesondere eine kastenförmige Form hat.

6. Fahrzeug (1) vom Satteltyp nach zumindest einem der vorhergehenden Ansprüche 1 bis 5, **dadurch gekennzeichnet, dass** der Karosserierahmen (3) ein Paar von Rahmengrundkörpem (19, 19) aufweist, die sich beide im Wesentlichen sowohl gerade nach hinten als auch nach unten von dem vorderen Endabschnitt des Karosserierahmens (3) erstrecken und über zumindest ein Kreuzteil (20, 21) verbunden sind.

7. Fahrzeug (1) vom Satteltyp nach zumindest einem der vorhergehenden Ansprüche 1 bis 6, **dadurch gekennzeichnet, dass** der zumindest eine Rahmengrundkörper (19) mit einem im Wesentlichen geraden, linearen Abschnitt (19a) versehen ist, wobei zumindest eine Dämpfungskraft- Erzeugungseinrichtung (44A) in einer Nähe des linearen Abschnittes (19a) angeordnet ist, um sich entlang des linearen Abschnittes (19a) zu erstrecken.

8. Fahrzeug (1) vom Satteltyp nach zumindest einem der vorhergehenden Ansprüche 1 bis 7, **dadurch gekennzeichnet, dass** sich ein Paar von Dämpfungskraft-Erzeugungseinrichtungen (44A, 44A) sowohl in der nach Vorwärts- RückwärtsRichtung des Fahrzeuges und die überbrückenden Vorderabschnitte (3a) als auch die hinteren Abschnitte (3b) des zumindest einen Rahmengrundkörpers (19) in dem Karosserierahmen (3) erstrecken, wobei die vorderen und hinteren Endabschnitten derselben jeweils durch Kupplungselemente (42, 43) an den vorderen und hinteren Abschnitten (3a, 3b) gekuppelt sind.

9. Fahrzeug (1) vom Satteltyp nach zumindest einem der vorhergehenden Ansprüche 6 bis 8, **dadurch gekennzeichnet, dass** ein Paar von Rahmengrundkörpem (19, 19) vorgesehen ist, wobei ein Paar von linken und rechten Dämpfungskraft-Erzeugungseinrichtungen (44A, 44A) angeordnet ist, um die ersten und zweiten Abschnitte (3a, 3b) an jeweils inneren, äußeren, unteren oder oberen Oberflächenseiten der Rahmengrundkörper (19, 19) zu überbrücken.

10. Fahrzeug (1) vom Satteltyp nach zumindest einem der vorhergehenden Ansprüche 6 bis 9, **dadurch gekennzeichnet, dass** die Vorderabschnitte (3a) jedes Rahmengrundkörpers (19) des Karosserierahmens (3) in der Nähe oder an Lagerabschnitten einer Brennkraftmaschine (34) einer Antriebsvorrichtung (33) angeordnet sind, und die hinteren Abschnitte (3b) jedes Rahmengrundkörpers (19) in der Nähe oder an den Schwenklagerabschnitten des hinteren Armes (10) angeordnet sind.

11. Fahrzeug (1) vom Satteltyp nach zumindest einem der vorhergehenden Ansprüche 6 bis 9, **dadurch gekennzeichnet, dass** die vorderen Abschnitte (3a) jedes Rahmengrundkörpers (19) des Karosserierahmens (3) vordere Endabschnitte des Rahmengrundkörpers (19) in der Nähe oder an dem Kopfrohr (18) sind und die hinteren Abschnitte (3b) Verlängerungsendabschnitte des Rahmengrundkörpers (19) sind.

12. Fahrzeug (1) vom Satteltyp nach zumindest einem der vorhergehenden Ansprüche 6 bis 11, **gekennzeichnet durch** zumindest eine Dämpfungskraft- Erzeugungseinrichtungen (44B, 44C), die sich in einer Richtung der Breite des Fahrzeuges (1) erstreckt und das Paar der Rahmengrundkörper (19, 19) überbrückt, wobei die Dämpfungskraft- Erzeugungseinrichtungen (44B, 44C) jeweils mit beiden Rahmengrundkörpem (19, 19) gekuppelt ist.

13. Fahrzeug (1) vom Satteltyp nach zumindest einem der vorhergehenden Ansprüche 1 bis 12, **dadurch gekennzeichnet, dass** der Sattelhalter (26) von zumindest einem Rahmengrundkörper (19) nach hinten vorspringt und den Sitz (28) trägt, wobei die zumindest eine Dämpfungskraft- Erzeugungseinrichtung (44) vorgesehen ist, den Rahmengrundkörper (19) und den Sitzhalter (26) zu überbrücken, wobei die Dämpfungskraft- Erzeugungseinrichtung (44E) jeweils mit dem Rahmengrundkörper (19) und dem Sitzhalter (26) gekuppelt ist.

14. Fahrzeug (1) vom Satteltyp nach zumindest einem der vorhergehenden Ansprüche 1 bis 13, **gekennzeichnet durch** eine Brennkraftmaschine (34), gelagert an dem Karosserierahmen (3), wobei zumindest eine Dämpfungskraft- Erzeugungseinrichtung (44F) angeordnet ist, um den zumindest einen Rahmengrundkörper (19) und die Brennkraftmaschine (34) zu überbrücken, wobei die Dämpfungskraft-Erzeugungseinrichtung (44F) jeweils mit dem Rahmengrundkörper (19) und der Brennkraftmaschine (34) gekuppelt ist.

15. Fahrzeug (1) vom Satteltyp nach zumindest einem der vorhergehenden Ansprüche 1 bis 14, **dadurch gekennzeichnet, dass** eine Dämpfungskraft- Erzeugungseinrichtung eine in jeder Richtung in Bezug auf die Dämpfungskraft- Erzeugungseinrichtung einwirkende Stoßkraft dämpft.

## Revendications

1. Véhicule de type à selle (1) comprenant un corps de véhicule (2) comportant un corps de cadre (3) comprenant une partie de corps de cadre (19), un bras arrière (10), et un support de selle (26) supportant ladite selle, dans lequel la partie de corps de cadre (19) comporte une structure d'amortissement de corps de cadre comprenant au moins des moyens de génération de force d'amortissement (44),
**caractérisé en ce que** :
les moyens de génération de force d'amortissement (44) sont respectivement couplés à leurs parties d'extrémité à des accouplements (42, 43), lesdits accouplements (42, 43) étant respectivement fixés sur une première et une seconde partie (3a, 3b) de la partie de corps de cadre (19), dans lequel lesdits moyens de génération de force d'amortissement sont configurés de manière à relier lesdites première et seconde parties (3a, 3b) du corps de cadre (3).

2. Véhicule de type à selle (1) selon la revendication 1, **caractérisé en ce qu'**au moins une partie de corps de cadre (19) s'étend vers l'arrière et vers le bas à partir d'une partie d'extrémité avant du corps de cadre (3) et supporte en pivotement le bras arrière (10) sur des parties d'extension (23) de celui-ci.

3. Véhicule de type à selle (1) selon la revendication 1 ou la revendication 2, **caractérisé par** un axe de support de pivotement (9) supportant en pivotement le bras arrière (10) sur une partie arrière du corps de cadre (3) afin de permettre un mouvement oscillant du bras arrière (10) et d'une roue arrière (12) supportée à une extrémité en oscillation du bras arrière (10).

4. Véhicule de type à selle selon au moins l'une des revendications précédentes 1 à 3, **caractérisé par** un tube de tête (18), qui configure la partie d'extrémité avant du corps de cadre (3) et supporte de manière directionnelle une fourche avant (6).

5. Véhicule de type à selle (1) selon au moins l'une des revendications précédentes 1 à 4, **caractérisé en ce que** les moyens de génération de force d'amortissement (44) sont disposés dans un espace interne d'au moins une partie de corps de cadre (19), ladite partie de corps de cadre ayant en particulier une forme de type caisson.

6. Véhicule de type à selle (1) selon au moins l'une des revendications précédentes 1 à 5, **caractérisé en ce que** le corps de cadre (3) comprend une paire de parties de corps de cadre (19, 19), toutes deux s'étendant essentiellement de manière rectiligne vers l'arrière et vers le bas à partir de la partie d'extrémité avant du corps de cadre (3) et étant connectées par l'intermédiaire d'un élément transversal (20, 21).

7. Véhicule de type à selle (1) selon au moins l'une des revendications précédentes 1 à 6, **caractérisé en ce qu'**au moins l'une des parties de corps de cadre (19) comporte une partie linéaire essentiellement rectiligne (19a), dans laquelle est disposé au moins l'un des moyens de génération de force d'amortissement (44A) à proximité de la partie linéaire (19a) de manière à s'étendre le long de la partie linéaire (19a).

8. Véhicule de type à selle (1) selon au moins l'une des revendications précédentes 1 à 7, **caractérisé par** une paire de moyens de génération de force d'amortissement (44A, 44A) qui s'étendent toutes deux dans une direction avant / arrière du véhicule et qui relient des parties avant (3a) et des parties arrière (3b) d'au moins une partie de corps de cadre (19) du corps de cadre (3), les parties d'extrémité avant et arrière de celui-ci étant respectivement couplées par des moyens d'accouplement (42, 43) aux parties avant et arrière (3a, 3b).

9. Véhicule de type à selle (1) selon au moins l'une des revendications précédentes 6 à 8,
**caractérisé en ce qu'**il est fourni une paire de parties de corps de cadre (19, 19), dans lesquelles est aménagée une paire de moyens de génération de force d'amortissement gauche et droit (44A, 44A) afin de relier les première et seconde parties (3a, 3b) respectivement sur les côtés de surface interne, externe, inférieur ou supérieur des parties de corps de cadre (19, 19).

10. Véhicule de type à selle (1) selon au moins l'une des revendications précédentes 6 à 9, **caractérisé en ce que** les parties avant (3a) de chaque partie de corps de cadre (19) du corps de cadre (3) sont positionnées à proximité ou sur des parties de support d'un moteur à combustion interne (34) d'un dispositif d'entraînement (33), et **en ce que** les parties arrière (3b) de chaque partie de corps de cadre (19) sont positionnées à proximité ou sur des parties de support en pivotement du bras arrière (10).

11. Véhicule de type à selle (1) selon au moins l'une des revendications précédentes 6 à 9, **caractérisé en ce que** les parties avant (3a) de chaque partie de corps de cadre (19) du corps de cadre (3) sont des parties d'extrémité avant des parties de corps de cadre (19) situées à proximité de ou sur le tube de tête (18), et **en ce que** les parties arrière (3b) sont des parties d'extrémité en extension des parties de corps de cadre (19).

12. Véhicule de type à selle (1) selon au moins l'une des revendications précédentes 6 à 11, **caractérisé par** au moins l'un des moyens de génération de force d'amortissement (44B, 44C) qui s'étend dans la direction de la largeur du véhicule (1) et qui relie la paire de parties de corps de cadre (19, 19), lesdits moyens de génération de force d'amortissement (44B, 44C) étant respectivement accouplés aux deux parties de corps de cadre (19, 19).

13. Véhicule de type à selle (1) selon au moins l'une des revendications précédentes 1 à 12, **caractérisé en ce que** le support de selle (26) est en saillie vers l'arrière à partir de l'au moins une partie de corps de cadre (19) et supporte la selle (28), dans lequel au moins l'un des moyens de génération de force d'amortissement (44E) est disposé de manière à relier la partie de corps de cadre (19) au support de selle (26), les moyens de génération de force d'amortissement (44E) étant respectivement accouplés à la partie de corps de cadre (19) et au support de selle (26).

14. Véhicule de type à selle (1) selon au moins l'une des revendications précédentes 1 à 13, **caractérisé par** un moteur à combustion interne (34) supporté par le corps de cadre (3), dans lequel au moins l'un des moyens de génération de force d'amortissement (44F) est disposé de manière à relier la au moins une partie de corps de cadre (19) et le moteur à combustion interne (34), les moyens de génération de force d'amortissement (44F) étant respectivement accouplés à la partie de corps de cadre (19) et au moteur à combustion interne (34).

15. Véhicule de type à selle (1) selon au moins l'une des revendications précédentes 1 à 14, **caractérisé en ce que** les moyens de génération de force d'amortissement amortissent une force d'impact qui s'applique dans n'importe quelle direction par rapport aux moyens de génération de force d'amortissement.
